# EUROPÄISCHE PATENTANMELDUNG

(11) **EP 3 663 021 A1**
(43) Veröffentlichungstag der Anmeldung: **10.06.2020**
(21) Anmeldenummer: 18210872.0
(22) Anmeldetag: 06.12.2018
(51) Int. Cl.: B22F 3/105, B65B 43/59, B65B 67/02, B65B 1/06, B33Y 30/00, B33Y 40/00, B29C 64/35, B29C 64/259, B29C 64/357, B29C 64/307

(54) **VORRICHTUNG ZUR RÜCKGEWINNUNG VON UNVERFESTIGTEM METALLPULVER**

(71) Anmelder: Werling, Marco, 76764 Rheinzabern (DE)
(72) Erfinder: Werling, Marco, 76764 Rheinzabern (DE)
(74) Vertreter: Geitz Truckenmüller Lucht Christ

(57) **Zusammenfassung**

Nach der Herstellung von Werkstücken in einem Metall-3D-Drucker befindet sich regelmäßig noch unverfestigtes Metallpulver in einem Werkstück, weil das Pulver schichtweise aufgebracht wird, jedoch in jeder vollständigen Schicht zumeist nur ein geringer Anteil des Pulvers mithilfe eines Lasers verfestigt, mithin mit den darunterliegenden Schichten verschweißt wird. Jedoch ist das Metallpulver gesundheitsschädlich, weil es beim Einatmen in die Lunge eintritt und so tief in die Lungenkanäle eindringen kann, dass es zu dauerhaften Schäden führt.

Vor diesem Hintergrund stellt die vorliegende Erfindung eine Weiterentwicklung bekannter Vorrichtungen dar, welche ein ungefährliches Entleeren eines Werkstücks und ein Rückgewinnen von unverfestigtem Metallpulver ermöglicht. Dies gelingt durch ein Pulverbecken mit Ablauf, über dem eine Haube geschlossen werden kann. Das Werkstück wird vor dem Schließen der Haube mit einer von außen kippbaren Aufnahmeplatte verbunden. So kann das Metallpulver beim Kippen des Werkstücks sich lediglich im Innenraum unter der Haube verteilen, aber nicht daraus entweichen.

## Beschreibung

Die vorliegende Erfindung betrifft eine Vorrichtung zur Rückgewinnung von unverfestigtem Metallpulver aus einem, insbesondere auf einer Substratplatte aufgebauten, Werkstück eines Metall-3D-Druckers, umfassend ein einem Standgestell starr anverbundenes Pulverbecken mit abschüssigen Seitenwänden und einem in einem tiefsten Punkt des Pulverbeckens angeordneten Ablauf, wobei dem Ablauf Verbindungsmittel zur pulverdichten Verbindung mit einem Zulauf eines Pulverbehälters zugeordnet sind.

Eine derartige Vorrichtung ist bereits aus der nachveröffentlichten DE 10 2017 127 162 A1 desselben Anmelders bekannt. Diese sieht einen Pulverwagen vor, der ein in eine Tischplatte eingelassenes Pulverbecken aufweist. Aus dem Werkzeug herausfallendes, unverfestigtes Metallpulver kann auf diese Weise in das Pulverbecken abgeladen werden. Unter dem Pulverbecken, das in einem tiefsten Punkt einen Ablauf aufweist, kann eine Pulverflasche zum Auffangen des in das Pulverbecken eingebrachten Pulvers angeschlossen werden. Beim Einbringen des Werkstücks in das Pulverbecken kann es bei dieser Lösung jedoch dazu kommen, dass sich das Pulver in der Luft verteilt, so dass mit dieser Lösung nur mit ausreichendem Atemschutz gearbeitet werden kann.

Ferner ist aus dem Stand der Technik die DE 10 2013 223 407 A1 vorbekannt. Hierbei handelt es sich um eine Vorrichtung, bei der das Werkstück in einem Aufnahmebehälter den Bauraum des Metall-3D-Druckers verlässt, wobei dieser Aufnahmebehälter dann in ein Karussel eingesetzt wird. Ein Pulverbecken wird mit dem Karussell so bewegt, das dieser von einer oben liegenden Befüllposition in eine unten liegende Auslassposition verdreht wird, wo ein Pulverbehälter an einem Auslass des Pulverbeckens angeschlossen werden kann. Bei einem Öffnen dieses Auslasses kann das Pulver hier in die Pulverflasche einrieseln. Aufgrund des Karussels und aufgrund der benötigten speziellen Bauform des Bauraums muss diese Lösung jedoch als Speziallösung angesehen werden, die einen hohen konstruktiven Aufwand darstellt. Ferner besteht keine Möglichkeit, festzustellen, wann sich umherwirbelndes Pulver so weit abgesetzt hat, dass der Aufnahmebehälter unproblematisch wieder entnommen werden kann.

Die DE 10 2009 005 769 A1 hingegen arbeitet mit einer Sieb-/Saugvorrichtung, um unverfestigtes Metallpulver zurückzugewinnen. Allerdings muss hier das Werkstück direkt über Kopf eingelegt werden, oder in dem Werkstück enthaltenes Pulver kann nicht vollständig entnommen werden.

Vor diesem Hintergrund liegt der vorliegenden Erfindung die Aufgabe zu Grunde, eine Vorrichtung zur Rückgewinnung von unverfestigtem Metallpulver zu schaffen, bei dem unabhängig von der Bauform und den verwendeten Behältern eine universelle Lösung geschaffen wird, mit der eine möglichst umfassende Rückgewinnung des Metallpulvers erfolgen kann.

Dies gelingt durch eine Vorrichtung zur Rückgewinnung von unverfestigtem Metallpulver aus einem, insbesondere auf einer Substratplatte aufgebauten, Werkstück eines Metall-3D-Druckers gemäß den Merkmalen des unabhängigen Anspruchs 1. Weitere, sinnvolle Ausgestaltungen einer solchen Vorrichtung können den sich anschließenden abhängigen Ansprüchen entnommen werden.

Erfindungsgemäß umfasst eine Vorrichtung zur Rückgewinnung von unverfestigtem Metallpulver zunächst, wie im Stand der Technik, ein fest auf einem Standgestell angeordnetes Pulverbecken. Dieses Pulverbecken weist in einem tiefsten Punkt einen Ablauf auf, welcher mit einem Pulverbehälter pulverdicht verbunden werden kann. Über dem Pulverbecken ist jedoch eine mit dem Pulverbecken pulverdicht verbindbare Haube vorgesehen, in deren Verschlusszustand ein abgedichteter Innenraum ausgebildet wird. Vor dem Verschließen der Haube wird daher ein Werkstück in den Bereich des Innenraums eingebracht, das durch ein Verschließen der Haube pulverdicht eingeschlossen ist. Ein an dem Ablauf angebrachter Pulverbehälter kann etwa bereits in das Pulverbecken eingerieseltes Metallpulver bereits aufnehmen.

Mit besonderem Vorteil wird jedoch das Werkstück auf einer Aufnahmeplatte befestigt, sei es direkt oder mit einer Substratplatte auf der es aufgebaut ist oder auch mit einem Aufnahmebehälter, in dem es als Ganzes aus dem Bauraum eines Metall-3D-Druckers entnommen wurde. Vorteilhafterweise wird eine Substratplatte oder ein Aufnahmebehälter Befestigungsmittel aufweisen, die eine solche Befestigung auf der Aufnahmeplatte erlauben, bereits aufweisen. Einem Werkstück, das ohne Zwischenlage auf der Aufnahmeplatte angebracht wird, können entsprechende Befestigungsmittel gegebenenfalls angeformt werden.

Die Aufnahmeplatte ist in dem Innenraum unter der Haube beweglich angeordnet, derart, dass die Aufnahmeplatte um eine Drehachse in Richtung des Ablaufs kippbar ist. Die Betätigung der Kippfunktion erfolgt hierbei von der Außenseite der Haube, so dass die Kippfunktion erst ausgelöst werden muss, nachdem die Haube bereits verschlossen wurde. So kann nunmehr das Metallpulver in das Pulverbecken einfallen, ohne dass das Metallpulver aus dem Innenraum entweichen kann. Umgekehrt erfolgt eine Rückgewinnung auf diese Weise aus einer beliebigen Konstruktion, ohne dass es besonderer Vorrichtungen bedarf.

Eine Betätigung der Kippfunktion kann hierbei mithilfe von Betätigungsmitteln erfolgen, welche insbesondere in Form mechanischer Betätigungshebel oder eines elektrischen Stellmotors realisiert werden können. Im Fall eines mechanischen Betätigungshebel, welcher die einfachere und bevorzugte Ausgestaltung darstellt, kann eine Betätigungswelle vorgesehen sein, welche an ihren Enden drehbar gelagert ist und an einem Ende den genannten Betätigungshebel aufweist. Im Bereich zwischen den drehbaren Lagern ist die Betätigungswelle fest mit der Aufnahmeplatte verbunden, also entweder mit dieser verschraubt, vernietet oder dergleichen, oder weist gegebenenfalls einen Exzenter auf, welcher für eine Unterstützung der Aufnahmeplatte bei der Drehung sorgt. Hierdurch kann die Aufnahmeplatte gekippt werden, so dass sich das darauf angeordnete Werkstück in Richtung des Ablaufs neigt. Insbesondere durch mehrmaliges Drehen und Zurückdrehen, besonders bevorzugt durch einen Anschlag, gegen den die Aufnahmeplatte gestoßen werden kann, löst sich das Metallpulver aus dem Werkstück heraus und fällt in das Pulverbecken hinein. Aufgrund des Umstands, dass die Betätigungsmittel von außerhalb der Haube, bzw. des von dieser mit dem Pulverbecken gebildeten Innenraums, bedienbar sind, kann das Metallpulver nicht aus dem Innenraum herausgelangen, so dass eine unnötige Luftbelastung vermieden wird.

Durch eine Anbringung eines elektrischen Stellmotors als Betätigungsmittel kann ein entsprechender Bewegungsablauf nachgebildet werden, so dass auf eine mechanische Bedienung verzichtet werden kann. In diesem Fall kann mit einigem Vorteil ein elektrischer Stellmotor an die Betätigungswelle angreifen und in gleicher Art und weise die Aufnahmeplatte in dem Innenraum bewegen.

Damit sich das Metallpulver zusätzlich besser von der Oberfläche des Werkstücks oder einer eventuell verwendeten Substratplatte oder eines Aufnahmebehälters löst, kann der Aufnahmeplatte zudem optional ein Oszillator, etwa in Form eines Exzentermotors, zugeordnet sein, welcher mit der Aufnahmeplatte in innigem Kontakt steht und diese bei einem Betrieb des Exzentermotors in Vibrationen versetzt. Nach dem gleichen Prinzip kann auch das Pulverbecken mit einem solchen Oszillator versehen sein, welcher das in das Pulverbecken eingerieselte Metallpulver, welches jedoch an den Wänden des Beckens haftet, in Richtung des Ablaufs befördern kann.

Insbesondere kann der Kippmechanismus der Aufnahmeplatte derart mit dem Oszillator gekoppelt sein, dass im Fall einer Kippbewegung der Aufnahmeplatte bis hin zu einem Kippanschlag der Kippanschlag durch einen elektrischen Kontakt gebildet ist, welcher den Oszillator an der Aufnahmeplatte selbsttätig in Betrieb setzt.

Insbesondere wird es als vorteilhaft angesehen, wenn die Haube an der Konstruktion unverlierbar befestigt ist. Hierzu kann die Haube vorzugsweise über eine Rückwand, die im Bereich des Pulverbeckens aufragt, mit der Konstruktion verbunden sein, so dass die Rückwand unbeweglich bleibt, während die Haube deren Oberkante gelenkig anverbunden ist. Bei einem Schließen der Haube verbinden sich die Kanten der Haube dann an einer vorderen und zwei seitlichen Kanten mit der Ebene des Pulverbeckenrands, sowie an zwei Hochkanten mit der Rückwand. Entlang der Scharnierkante zwischen Haube und Rückwand ist vorzugsweise eine pulverdichte Gelenkanordnung vorgesehen.

Mit einigem Vorteil kann die Haube über eine Gasdruckfeder betätigt werden, welche die Haube in definierten Positionen halten kann. Insbesondere kann sich ein stabiler Verschlusszustand und ein stabiler Öffnungszustand einstellen, die jeweils von der Gasdruckfeder unterstützt werden.

Um auch von außen feststellen zu können, wann sich Verwirbelungen von Metallpulver im Innenraum gelegt haben, kann die Haube zumindest abschnittsweise transparent gebildet sein. Hierfür können insbesondere Fenster aus Plexiglas oder Glas eingesetzt sein, die pulverdicht in die Haube eingelassen sind.

Ferner können die Haube und/oder die Rückwand, soweit letztere vorhanden ist, wenigstens einen Anschluss zum Absaugen von Luft, vorzugsweise einen Sauganschluss zum Absaugen und einen Blasanschluss zum Einblasen von Luft aufweisen. Soweit nur ein Sauganschluss vorgesehen ist, kann ein geeignetes Druckventil vorgesehen sein, das Außenluft ansaugt, wenn aus dem Innenraum Luft in einen Pulverbehälter hinein angesaugt wird. Der Überdruck in dem Pulverbehälter kann wiederum durch ein Überdruckventil abgebaut werden, vor dem ein Filter zum Zurückhalten von Metallpulver angeordnet ist.

Besonders bevorzugt hingegen kann der Haube und/oder der Rückwand ein geschlossener Luftkreislauf zugeordnet sein, welcher auf einer Seite Luft ansaugt, durch einen Pulverbehälter hindurchleitet und schließlich wieder in den Innenraum zurückführt, wobei in dem Luftkreislauf mithilfe wenigstens eines Filters dafür gesorgt wird, dass das Metallpulver in dem Pulverbehälter verbleibt. Sofern doch ein Durchtritt des Metallpulvers durch den Filter geschieht, wird die zumindest teilweise gereinigte Luft dann wieder in den Innenraum gegeben, wo sie ein weiteres Mal einer Filterung unterzogen werden kann.

Mit einigem Vorteil kann die vorbeschriebene Vorrichtung auf dem Standgestell rollbar ausgeführt sein, so dass ein rollbarer Tischwagen entsteht, der an verschiedene Einsatzorte verfahren werden kann und hierzu bedarfsweise auf einer unter dem Pulverbecken angeordneten Lagerplatte eine oder mehrere zusätzliche Pulverbehälter tragen kann.

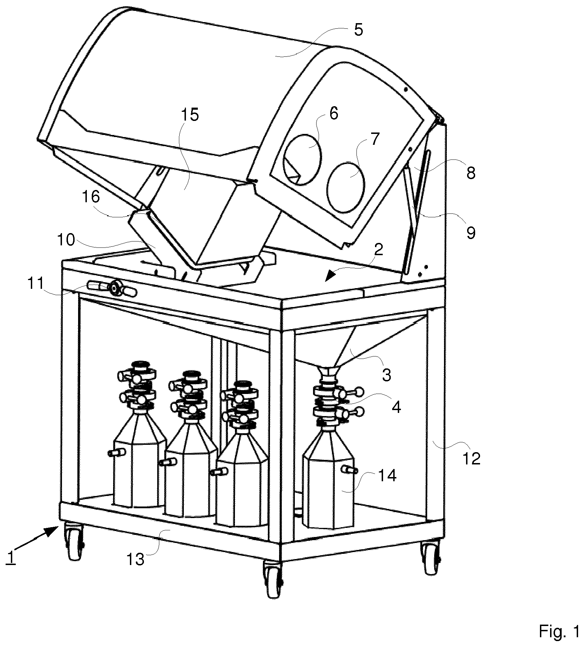

Die vorstehend beschriebene Erfindung wird im Folgenden anhand eines Ausführungsbeispiels näher erläutert. Figur 1 zeigt in diesem Zusammenhang einen erfindungsgemäßen Tischwagen in einer perspektivischen Darstellung von schräg vorne mit einem auf einer Substratplatte aufgebauten Werkstück und einer teilweise geöffneten Haube.

Insoweit stellt die Figur 1 lediglich zur Anschauung einen Zustand dar, der im Betrieb nicht vorkommen soll. Ein Tischwagen 1 weist, erhöht auf einem Standgestell 12 gelagert, ein Pulverbecken 2 auf, welches einen Ablauf 3 in einem tiefsten Punkt des Pulverbeckens 2 besitzt. Unter diesem Ablauf 3 ist ein Pulverbehälter 14 mithilfe von pulverdichten Verbindungsmitteln 4 angeordnet, so dass in das Pulverbecken 2 einrieselndes Metallpulver direkt über den Ablauf 3 in den Pulverbehälter 14 verbracht werden kann.

Damit jedoch ein Werkstück 15 ohne Staubentwicklung in das Pulverbecken 2 entleert werden kann, ist dem Pulverbecken 2 eine Aufnahmeplatte 10 zugeordnet, welche im vorliegenden Fall direkt mit einer Substratplatte 16, auf der das Werkstück 15 aufgebaut worden ist, kraftschlüssig verbunden ist. Nach dem Verbinden des Werkstücks 15 mit der Aufnahmeplatte 10 wird eine Haube 5 geschlossen, welche gemeinsam mit dem Pulverbecken 2 und einer Rückwand 8 einen Innenraum pulverdicht umschließt, in dem das Werkstück 15 dadurch aufgenommen ist.

Hierdurch ist es nun möglich, das Werkstück 15 in dem Innenraum zu bewegen, ohne dass aus dem Werkstück 15 herausrieselndes Metallpulver sich in der Luft verteilt. Vielmehr verbleibt der Pulverstaub, soweit er nicht direkt in das Pulverbecken 2 und von dort über den Ablauf 3 in einen angeschlossenen Pulverbehälter 14 rieselt, zumindest in dem Innenraum und verschmutzt nicht die Luft um den Arbeitsplatz herum. Dies vor allem deshalb, weil die Aufnahmeplatte 10 mithilfe eines Betätigungshebels 11 um eine Drehachse herum in Richtung des Ablaufs 3 des Pulverbeckens 2 hin kippbar ist, so dass eine Bewegung des Werkstücks 15 in dem Innenraum erfolgen kann, ohne dass Pulver entweichen kann.

Durch ein Betätigen des Betätigungshebels 11 kann dieser gedreht und die Aufnahmeplatte 10 gekippt werden, was nach Bedarf mehrfach wiederholt werden kann. Durch ein hier nicht näher dargestelltes transparentes Fenster der Haube 5 kann dieser Vorgang beobachtet werden und abgesehen werden, ob sich noch Metallpulver in dem Werkstück 15 befindet. Bedarfsweise kann ein nicht näher dargestellter Oszillator, der an der Aufnahmeplatte angeordnet sein kann, eingesetzt werden, um das Metallpulver weiter in das Pulverbecken 2 abzuschütteln.

Ferner weist die Haube 5 einen Sauganschluss 6 und einen Blasanschluss 7 auf, über welche ein geschlossener, zirkulierender Luftkreislauf aufgebaut werden kann. Hierbei wird mittels einer Luftpumpe Luft aus dem Innenraum abgesaugt und durch den gleichen oder einen weiteren Pulverbehälter 14 hindurchgeleitet, wobei eingetragenes Metallpulver an einem Ausgangsfilter abgeschieden wird und in dem Pulverbehälter 14 verbleibt. In Strömungsrichtung hinter dem Ausgangsfilter ist die Luftpumpe angeordnet und bläst die angesaugte Luft wieder in den Innenraum unter der Haube 5, so dass dort der Druck konstant bleibt. Erst wenn sich im Innenraum mehr oder weniger kein Metallpulver mehr befindet, oder zumindest dieses nicht mehr in der Luft verwirbelt ist, wird die Haube 5 wieder geöffnet und das gereinigte, von unverfestigtem Metallpulver befreite, Werkstück entnommen.

Vorstehend beschrieben ist somit eine Vorrichtung zur Rückgewinnung von unverfestigtem Metallpulver, bei dem unabhängig von der Bauform und den verwendeten Behältern eine universelle Lösung geschaffen wird, mit der eine möglichst umfassende Rückgewinnung des Metallpulvers erfolgen kann.

### BEZUGSZEICHENLISTE

- 1: Tischwagen
- 2: Pulverbecken
- 3: Ablauf
- 4: Verbindungsmittel
- 5: Haube
- 6: Sauganschluss
- 7: Blasanschluss
- 8: Rückwand
- 9: Gasdruckfeder
- 10: Aufnahmeplatte
- 11: Betätigungshebel
- 12: Standgestell
- 13: Lagerplatte
- 14: Pulverbehälter
- 15: Werkstück
- 16: Substratplatte

## Patentansprüche

1. Vorrichtung zur Rückgewinnung von unverfestigtem Metallpulver aus einem, vorzugsweise auf einer Substratplatte (16) aufgebauten, Werkstück (15) eines Metall-3D-Druckers, umfassend ein einem Standgestell (12) starr anverbundenes Pulverbecken (2) mit abschüssigen Seitenwänden und einem in einem tiefsten Punkt des Pulverbeckens (2) angeordneten Ablauf (3), wobei dem Ablauf (3) Verbindungsmittel zur pulverdichten Verbindung mit einem Zulauf eines Pulverbehälters (14) zugeordnet sind,
**dadurch gekennzeichnet, dass** dem Pulverbecken (2) eine Haube (5) zugeordnet ist, welche in einem Verschlusszustand einen Innenraum zwischen sich und dem Pulverbecken (2) pulverdicht einschließt, und das Pulverbecken (2) ferner eine in dem Innenraum angeordnete Aufnahmeplatte (10) zur kraftschlüssigen Verbindung mit einer Substratplatte (16) des Werkstücks (15), einem Aufnahmebehälter des Werkstücks (15) oder dem Werkstück (15) selbst aufweist, wobei die Aufnahmeplatte (10) aufgrund einer Betätigung von außerhalb des Innenraums zugänglicher Betätigungsmittel um eine Drehachse in Richtung des Ablaufs (3) kippbar ist.

2. Vorrichtung gemäß Anspruch 1, **dadurch gekennzeichnet, dass** es sich bei den Betätigungsmitteln um einen Betätigungshebel (11) handelt, welcher mit einer drehbar gelagerten, kraftschlüssig an der Aufnahmeplatte (10) angreifenden Betätigungswelle verbunden ist.

3. Vorrichtung gemäß Anspruch 1, **dadurch gekennzeichnet, dass** es sich bei den Betätigungsmitteln um einen Stellmotor handelt, dessen Antriebsachse mit einer kraftschlüssig an der Aufnahmeplatte angreifenden Betätigungswelle verbunden ist.

4. Vorrichtung gemäß einem der vorhergehenden Ansprüche, **dadurch gekennzeichnet, dass** der Aufnahmeplatte (10) ein Oszillator zur Beaufschlagung der Aufnahmeplatte (10) mit einer Vibration innig anverbunden ist.

5. Vorrichtung gemäß Anspruch 4, **dadurch gekennzeichnet, dass** der Oszillator Mittel zum selbsttätigen Auslösen einer Vibration bei Erreichen eines Kippanschlags durch die Aufnahmeplatte (10) aufweist.

6. Vorrichtung gemäß einem der vorhergehenden Ansprüche, **dadurch gekennzeichnet, dass** dem Pulverbecken (2) ein Oszillator innig anverbunden ist.

7. Vorrichtung gemäß einem der vorhergehenden Ansprüche, **dadurch gekennzeichnet, dass** dem Pulverbecken (2) eine über diesem aufragende Rückwand (8) zugeordnet ist und die Haube (5) dieser Rückwand (8) gelenkig anverbunden ist.

8. Vorrichtung gemäß Anspruch 7, **dadurch gekennzeichnet, dass** die Haube (5) gegen den Druck einer Gasdruckfeder (9) zwischen einem stabilen Verschlusszustand und einem stabilen Öffnungszustand beweglich ist.

9. Vorrichtung gemäß einem der vorhergehenden Ansprüche, **dadurch gekennzeichnet, dass** die Haube (5) zumindest abschnittsweise transparent ist.

10. Vorrichtung gemäß einem der vorhergehenden Ansprüche, **dadurch gekennzeichnet, dass** der Haube (5) und/oder einer feststehenden Rückwand (8) wenigstens ein Anschluss (6, 7) zum Einbringen und/oder Absaugen von Luft zugeordnet sind.

11. Vorrichtung gemäß Anspruch 10, **dadurch gekennzeichnet, dass** zwischen einem Sauganschluss (6) zum Absaugen von Luft aus dem Innenraum und einem Blasanschluss (7) zum Einblasen von Luft in den Innenraum ein geschlossener Luftkreislauf gebildet ist, in dem eine Pulverflasche (14) zur Aufnahme mit der Luft abgesaugten Pulvers, sowie in Strömungsrichtung nach der Pulverflasche (14) Rückhaltemittel zur Filterung der abgesaugten Luft und Mittel zur Erzeugung eines Luftstroms angeordnet sind.

12. Vorrichtung gemäß einem der vorhergehenden Ansprüche, **dadurch gekennzeichnet, dass** das Standgestell (12) auf einem rollbaren Tischwagen (1) angeordnet ist und vorzugsweise unterhalb des Pulverbeckens (2) wenigstens eine Aufnahme zur Lagerung eines oder mehrerer Pulverbehälter (14) aufweist.
